# EUROPÄISCHE PATENTSCHRIFT

(11) **EP 3 238 972 B1**
(45) Veröffentlichungstag und Bekanntmachung des Hinweises auf die Patenterteilung: **18.12.2019**
(21) Anmeldenummer: 16167253.0
(22) Anmeldetag: 27.04.2016
(51) Int. Cl.: B60K 15/03, B60K 15/035

(54) **ABSCHEIDENIPPEL**
SEPARATION NIPPLE
RACCORD D'ISOLATION

(43) Veröffentlichungstag der Anmeldung: 01.11.2017
(73) Patentinhaber: Magna Steyr Fuel Systems GesmbH, 8261 Sinabelkirchen (AT)
(72) Erfinder: STEINMANN, Dominik, 8223 Stubenberg (AT); ZIERLER, Patrick, 8063 Brodingberg (AT); BINDER, Michael, 8200 Gleisdorf (AT); SCHWEIGER, Carina, 8160 Weiz (AT)
(74) Vertreter: Zangger, Bernd

(56) Entgegenhaltungen:
- WO-A1-2015/087506
- DE-A1-102008 061 264
- DE-A1-102014 007 709
- FR-A1- 3 015 909
- US-A1- 2002 189 691

## Beschreibung

### Gebiet der Erfindung

Die vorliegende Erfindung betrifft eine Tankvorrichtung für ein Kraftfahrzeug umfassend einen Abscheidenippel zur Abscheidung von Flüssigkeit aus einer Entlüftungseingangsleitung in ein Einfüllrohr eines Kraftfahrzeuges.

### Stand der Technik

Es ist bereits bekannt Abscheidenippel an Einfüllrohren zu verbauen, die mit einer Entlüftungsleitung eines Tanks verbunden sind und andererseits Ausgangsleitungen zu einem Kraftstoffdampffilter, insbesondere einem Aktivkohlefilter, aufweisen. Aus dem Tank austretender Kraftstoffdampf kann durch eine derartige Vorrichtung zu dem Aktivkohlefilter geleitet werden, wobei auf dem Strömungsweg des Kraftstoffdampfes der Abscheidenippel für eine möglichst weitgehende Trennung des flüssigen Kraftstoffes vom in Richtung zum Aktivkohlefilter weitergeleiteten Gas sorgt. Der abgeschiedene flüssige Kraftstoff kann über eine Öffnung des Abscheidenippels in das Einfüllrohr abgelassen werden und über dieses in den Tank zurückströmen.

Es ist auch bekannt bei Druck-Tanksystemen beim Öffnen einer Tancklappe einen möglichen Überdruck im Tanksystem abrupt durch das Öffnen eines elektromagnetischen Ventils abzulassen. Durch eine derartige sogenannte "Sofortentlüftung" soll ein Austritt von Treibstoff-Spray auf Grund des Überdrucks im Tank vermieden werden. Durch die Sofortentlüftung kommt es allerdings zu einem so hohen impulsartigen Volumenstrom, dass es durch unzureichende Flüssigkeitsabscheidung zu einem Übertritt von flüssigem Kraftstoff zum Aktivkohlefilter und wiederum zu einem Kraftstoff-Spray aus dem Einfüllkopf kommen kann.

Aus der WO 2015/087506 A1 ist eine Klappenventileinrichtung und eine Gas-Flüssigkeits-Trenneinrichtung mit der Klappenventileinrichtung bekannt, wobei die Klappenventileinrichtung einen Körper mit einer Öffnung, eine Klappe zum Öffnen und Schließen der Öffnung und eine Torsionsschraubenfeder aufweist, die zwischen dem Körper und der Klappe zum Vorspannen der Klappe in Öffnungs-Richtung vorgesehen ist. Die Klappe kann zusätzlich zu einer Hauptfläche, durch die die Öffnung geschlossen werden kann, eine zur Hauptfläche geneigte Blattfeder umfassen.

### Zusammenfassung der Erfindung

Es ist eine Aufgabe der Erfindung, eine verbesserte Tankvorrichtung für ein Kraftfahrzeug umfassend einen Abscheidenippel anzugeben, so dass negative Auswirkungen bei einer Sofortentlüftung verringert werden und insbesondere das Austreten von Kraftstoff-Spray aus dem Einfüllkopf verhindert oder zumindest reduziert wird.

Die Lösung der Aufgabe erfolgt durch eine Tankvorrichtung für ein Kraftfahrzeug mit den Merkmalen gemäß Anspruch 1.

Erfindungsgemäß ist eine Klappe zum Verschließen der Öffnung durch welche abgeschiedene Flüssigkeit in das Einfüllrohr gelangen kann mit zwei zueinander geneigten Flächen ausgebildet, nämlich einer Hauptfläche die im Wesentlichen zum Verschließen der Öffnung dient und einer Reflektorfläche, die im Wesentlichen dazu dient abfließende Flüssigkeit oder Kraftstoffdampf vom offenen Ende des Einfüllrohres bzw. Einfüllkopfes weg und somit zu dem, dem Tank zugewandten, inneren Ende des Einfüllrohres hin umzulenken. Hierdurch kann das Austreten von Kraftstoff am offenen Ende des Einfüllrohres und somit das Auftreten von Kraftstoff-Spray verringert werden.

Erfindungsgemäß blockiert die Reflektorfläche bei geöffneter Klappe einen Strömungsweg für durch die Öffnung gelangende Flüssigkeit zum Ausgang. Hierdurch kann ein Abgang von an der Öffnung austretender Flüssigkeit zum Aktivkohlefilter verschlossen werden.

Ein "Reflektor" ist dabei ein Gegenstand der so ausgeformt ist, dass er ein Medium - im vorliegenden Fall Flüssigkeit, insbesondere Kraftstoff - umlenken kann, insbesondere durch geneigte Flächen, die zusammen aus Sicht der aus der Öffnung fließenden und am Reflektor auftreffenden Flüssigkeit eine im Wesentlichen konkave Form bilden.

"Verbunden" und "verbindbar" bedeutet im Rahmen dieser Erfindung immer so verbunden bzw. verbindbar, dass eine Fluidströmung ermöglicht wird, also strömungsverbunden bzw. strömungsverbindbar.

Vorzugsweise ist die Reflektorfläche in einem Winkel zwischen 30 und 150 Grad zur Hauptfläche geneigt, bevorzugt zwischen 60 und 120 Grad, besonders bevorzugt ca. 90 oder ca. 100 Grad. Die Reflektorfläche ist dabei bevorzugt einstückig mit der Hauptfläche ausgebildet. Die Reflektorfläche kann auch an der Hauptfläche befestigt sein, bevorzugt stoffschlüssig.

Der Abscheidenippel umfasst bevorzugt zur Abscheidung mindestens eine erste Schottwand. Alternativ oder zusätzlich kann der Abscheidenippel auch einen Zyklon zur Abscheidung umfassen.

Bevorzugt blockiert die Reflektorfläche bei geöffneter Klappe einen Strömungsweg für durch die Öffnung gelangende Flüssigkeit zum Ausgang indem die Reflektorfläche an der ersten Schottwand des Abscheidenippels anliegt.

Vorzugsweise bildet die Reflektorfläche selbst, bei geschlossener Klappe, eine weitere Schottwand des Abscheidenippels sodass die Klappe somit einen dreifachen Nutzen erfüllt, da die Klappe außer der Verwendung zum Schließen der Öffnung und zum Reflektieren abgeschiedener Flüssigkeit bzw. Dampfes auch zum Abscheiden von Flüssigkeit verwendet wird.

Die Klappe ist bevorzugt zum Öffnen und Schließen um eine Schwenkachse schwenkbar, wobei die Schwenkachse an einem Ende der Hauptfläche angeordnet ist.

Vorzugsweise ist die Reflektorfläche in der Nähe der Schwenkachse mit der Hauptfläche verbunden oder geht dort in die Hauptfläche über, falls Hauptfläche und Reflektorfläche einstückig ausgeführt sind.

Eine erfindungsgemäße Tankvorrichtung für ein Kraftfahrzeug, umfasst einen Tank, eine mit dem Tank verbundene Entlüftungseingangsleitung, ein Einfüllrohr zum Betanken des Tanks, eine mit einem Kraftstoffdampffilter verbundene Entlüftungsausgangsleitung, und einen Abscheidenippel wie zuvor beschrieben, wobei der Eingang des Abscheidenippels mit der Entlüftungseingangsleitung verbunden ist, der Ausgang des Abscheidenippels mit der Entlüftungsausgangsleitung verbunden ist, wobei die Öffnung des Abscheidenippels mit dem Innenraum des Einfüllrohres verbunden ist. Hierdurch kann abgeschiedene Flüssigkeit durch die Öffnung in das Innere des Einfüllrohres abfließen. Die Klappe des Abscheidenippels ist so unterhalb der Öffnung zum Einfüllrohr angeordnet, dass die Reflektorfläche zusammen mit der Hauptfläche bei geöffneter Klappe einen Reflektor bildet, der durch die Öffnung gelangende Flüssigkeit in Richtung zum Tank-Ende des Einfüllrohres hin ablenkt.

Die Schwenkachse der Klappe ist bevorzugt an einem Ende der Hauptfläche der Klappe angeordnet, das einem Tankverschluss des Einfüllrohrs zugewandt ist. Ungefähr an dieser Schwenkachse befindet sich auch der Übergang von Hauptfläche in Reflektorfläche, so dass der reflektierende Winkel kleiner 180 Grad zwischen Hauptfläche und Reflektorfläche zum Tank-Ende des Einfüllrohres hin weist.

Die Klappe ist vorzugsweise so im Einfüllrohr angeordnet, dass sie durch ein in das Einfüllrohr eingeführtes Zapfventil zum so verschwenkt wird, dass die Öffnung verschlossen wird.

Besonders bevorzugt umfasst die Tankvorrichtung zumindest ein Ventil, insbesondere elektromagnetisches Ventil, dass so eingerichtet ist, dass das Ventil beim Öffnen einer Tankklappe oder eines Tankverschlusses betätigt wird, insbesondere geöffnet wird, so dass ein eventueller Überdruck im Tank über die Entlüftungseingangsleitung abgebaut wird.

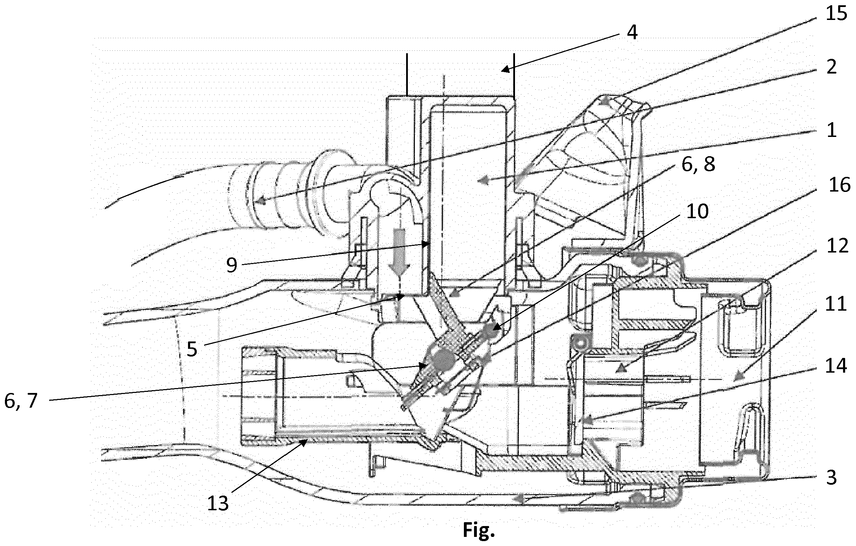

### Kurzbeschreibung der Zeichnung

Die Erfindung wird im Folgenden beispielhaft unter Bezugnahme auf die Zeichnung beschrieben.
- Fig.: ist eine Schnittansicht eines Bereiches einer erfindungsgemäßen Tankvorrichtung um den Abscheidenippel der Tankvorrichtung.

### Detaillierte Beschreibung der Erfindung

In der Fig. ist eine erfindungsgemäße Tankvorrichtung ausschnittsweise dargestellt, welche eine mit einem nicht dargestellten Tank verbundene Entlüftungseingangsleitung 2 aufweist, ein Einfüllrohr 3 zum Betanken des Tanks, eine mit einem nicht dargestellten Kraftstoffdampffilter verbundene Entlüftungsausgangsleitung 4, und einen Abscheidenippel 1. Der Eingang des Abscheidenippels 1 ist mit der Entlüftungseingangsleitung 2 verbunden, der Ausgang des Abscheidenippels 1 mit der Entlüftungsausgangsleitung 4 verbunden. Eine Öffnung 5 des Abscheidenippels 1 ist mit dem Innenraum des Einfüllrohres 3 verbunden, da die Öffnung 5 direkt in das Einfüllrohr 3 mündet. Das Einfüllrohr 3 weist einen Halter 15 zur Befestigung auf.

Im unteren Bereich des Abscheidenippels 1 ist eine Klappe 6 angeordnet, so dass die Öffnung 5 über die Klappe 6 verschließbar ist. Die Klappe 6 weist eine Hauptfläche 7 zum Schließen der Öffnung 5 auf und eine zur Hauptfläche 7 geneigte Reflektorfläche 8. Die Reflektorfläche 8 bildet zusammen mit der Hauptfläche 7 bei geöffneter Klappe 6 (wie in Fig. dargestellt) einen Reflektor, der durch die Öffnung 5 gelangende Flüssigkeit in Richtung zum Tank-Ende des Einfüllrohres 3 hin ablenkt. Die Reflektorfläche 8 ist in einem Winkel von ca. 90 Grad zur Hauptfläche 7 geneigt.

Dem Tank-Ende gegenüberliegend weist das Einfüllrohr 3 eine Betankungsöffnung auf, die über einen Tankverschluss 11 verschließbar ist. Zwischen Tankverschluss 11 und Klappe 6 sind ein Fixiereinsatz 12 sowie eine Erdungsklappe 14 angeordnet. Auf der gegenüberliegenden Seite der Klappe 6, die dem Tank zugewandt ist, ist eine Strömungsleiteinrichtung 13 (Flow-Guide) zur Führung des Kraftstoffes beim Betanken angeordnet.

Der Abscheidenippel 1 weist zur Abscheidung von flüssigem Kraftstoff aus einem zuströmenden Kraftstoffdampf Schottwände 9 auf.

Die Reflektorfläche 8 blockiert bei geöffneter Klappe 6 einen Strömungsweg für durch die Öffnung 5 gelangende Flüssigkeit zum Ausgang, also in Richtung zur Entlüftungsausgangsleitung 4. Die Reflektorfläche 8 liegt an einer ersten Schottwand 9 des Abscheidenippels 1 an.

Bei geschlossener Klappe 6 bildet die Reflektorfläche 8 eine zusätzliche weitere Schottwand des Abscheidenippels 1.

Die Hauptfläche 7 der Klappe 6 weist an ihrer Unterseite ein Schwimmerventil 16 auf. Das Schwimmerventil 16 dient dazu, während einer Betankung bei geschlossener Klappe 6 einen Übertritt von Kraftstoff im Falle eines nicht abschaltenden Zapfventils über eine Rezirkulationsbohrung in das Entlüftungssystem zu vermeiden.

Die Klappe 6 ist zum Öffnen und Schließen um eine Schwenkachse 10 schwenkbar, wobei die Schwenkachse 10 an einem Ende der Hauptfläche 7 angeordnet ist. Im Bereich dieser Schwenkachse 10 geht auch die Reflektorfläche 8 in die Hauptfläche 7 über.

Durch Einführen eines Zapfventils von Seite des Tankverschlusses 11 in das Einfüllrohr 3 kann die Klappe 6 nach oben geschwenkt werden um die Öffnung 5 zu verschließen.

Bei geöffneter Klappe 6 kann abgeschiedener Kraftstoff von der Öffnung 5 durch die reflektierende Wirkung von Reflektorfläche 8 und Hauptfläche 7 der Klappe 6 in Richtung zum Tank-Ende hin, durch das Einfüllrohr 3 und teilweise durch die Strömungsleiteinrichtung 13 umgelenkt werden.

### Bezugszeichenliste

- 1: Abscheidenippel
- 2: Entlüftungseingangsleitung
- 3: Einfüllrohr
- 4: Entlüftungsausgangsleitung
- 5: Öffnung
- 6: Klappe
- 7: Hauptfläche
- 8: Reflektorfläche
- 9: erste Schottwand
- 10: Schwenkachse
- 11: Tankverschluss
- 12: Fixiereinsatz
- 13: Strömungsleiteinrichtung
- 14: Erdungsklappe
- 15: Halter
- 16: Schwimmerventil

## Patentansprüche

1. Tankvorrichtung für ein Kraftfahrzeug, umfassend einen Tank, eine mit dem Tank verbundene Entlüftungseingangsleitung (2), ein Einfüllrohr (3) zum Betanken des Tanks, eine mit einem Kraftstoffdampffilter verbundene Entlüftungsausgangsleitung (4), und einen Abscheidenippel (1) zur Abscheidung von Flüssigkeit aus der Entlüftungseingangsleitung (2) in das Einfüllrohr (3), der Abscheidenippel (1) umfassend einen mit der Entlüftungseingangsleitung (2) verbindbaren Eingang, einen mit der Entlüftungsausgangsleitung (4) verbindbaren Ausgang, eine mit dem Innenraum des Einfüllrohres (3) verbindbare Öffnung (5) und eine Klappe (6), wobei die Öffnung (5) über die Klappe (6) verschließbar ist, wobei der Eingang des Abscheidenippels (1) mit der Entlüftungseingangsleitung (2) verbunden ist, der Ausgang des Abscheidenippels (1) mit der Entlüftungsausgangsleitung (4) verbunden ist, wobei die Öffnung (5) des Abscheidenippels (1) mit dem Innenraum des Einfüllrohres (3) verbunden ist, wobei die Klappe (6) eine Hauptfläche (7) und eine zur Hauptfläche (7) geneigte Reflektorfläche (8) umfasst, wobei die Öffnung (5) bei geschlossener Klappe (6) durch die Hauptfläche (7) verschlossen ist und die Reflektorfläche (8) zusammen mit der Hauptfläche (7) bei geöffneter Klappe (6) einen Reflektor bildet, der durch die Öffnung (5) gelangende Flüssigkeit in Richtung zum Tank-Ende des Einfüllrohres (3) hin ablenkt, **dadurch gekennzeichnet, dass** die Reflektorfläche (8) bei geöffneter Klappe (6) einen Strömungsweg für durch die Öffnung (5) gelangende Flüssigkeit zum Ausgang blockiert.

2. Tankvorrichtung nach Anspruch 1,
**dadurch gekennzeichnet, dass** die Reflektorfläche (8) in einem Winkel zwischen 30 und 150 Grad zur Hauptfläche (7) geneigt ist, bevorzugt zwischen 60 und 120 Grad, besonders bevorzugt ca. 90 oder ca. 100 Grad.

3. Tankvorrichtung nach zumindest einem der vorhergehenden Ansprüche,
**dadurch gekennzeichnet, dass** der Abscheidenippel (1) zur Abscheidung mindestens eine erste Schottwand (9) umfasst.

4. Tankvorrichtung nach Anspruch 3,
**dadurch gekennzeichnet, dass** die Reflektorfläche (8) bei geöffneter Klappe (6) einen Strömungsweg für durch die Öffnung (5) gelangende Flüssigkeit zum Ausgang dadurch blockiert dass die Reflektorfläche (8) an der ersten Schottwand (9) des Abscheidenippels (1) anliegt.

5. Tankvorrichtung nach zumindest einem der vorhergehenden Ansprüche,
**dadurch gekennzeichnet, dass** die Reflektorfläche (8) bei geschlossener Klappe (6) eine weitere Schottwand des Abscheidenippels (1) bildet.

6. Tankvorrichtung nach zumindest einem der vorhergehenden Ansprüche,
**dadurch gekennzeichnet, dass** die Klappe (6) zum Öffnen und Schließen um eine Schwenkachse (10) schwenkbar ist, wobei die Schwenkachse (10) an einem Ende der Hauptfläche (7) angeordnet ist.

7. Tankvorrichtung nach zumindest einem der vorhergehenden Ansprüche,
**dadurch gekennzeichnet, dass** die Schwenkachse (10) der Klappe (6) an einem Ende der Hauptfläche (7) der Klappe (6) angeordnet ist, das einem Tankverschluss (11) des Einfüllrohrs (3) zugewandt ist.

8. Tankvorrichtung nach zumindest einem der vorhergehenden Ansprüche,
**dadurch gekennzeichnet, dass** die Klappe (6) so im Einfüllrohr (3) angeordnet ist, dass sie durch ein in das Einfüllrohr (3) eingeführtes Zapfventil zum Schließen der Öffnung verschwenkt wird.

## Claims

1. Tank installation for a motor vehicle, comprising a tank, a vent inlet line (2) connected to the tank, a filler pipe (3) for refuelling the tank, a vent outlet line (4) connected to a fuel vapour filter, and a separation nipple (1) for separating liquid from the vent inlet line (2) into the filler pipe (3), the separation nipple (1) comprising an inlet, which can be connected to the vent inlet line (2), an outlet, which can be connected to the vent outlet line (4), an opening (5), which can be connected to the interior of the filler pipe (3), and a flap (6), wherein the opening (5) can be closed by means of the flap (6), wherein the inlet of the separation nipple (1) is connected to the vent inlet line (2), the outlet of the separation nipple (1) is connected to the vent outlet line (4), wherein the opening (5) of the separation nipple (1) is connected to the interior of the filler pipe (3), wherein the flap (6) comprises a main surface (7) and a reflector surface (8), which slopes relative to the main surface (7), wherein the opening (5) is closed by the main surface (7) when the flap (6) is closed, and the reflector surface (8) forms a reflector together with the main surface (7) when the flap (6) is open, which reflector deflects liquid passing through the opening (5) in the direction of the tank end of the filler pipe (3), **characterized in that** the reflector surface (8) blocks a flow path to the outlet for liquid passing through the opening (5) when the flap (6) is open.

2. Tank installation according to Claim 1,
**characterized in that** the reflector surface (8) slopes at an angle of between 30 and 150 degrees to the main surface (7), preferably between 60 and 120 degrees, particularly preferably at about 90 or about 100 degrees.

3. Tank installation according to at least one of the preceding claims,
c**haracterized in that** the separation nipple (1) comprises at least one first partition wall (9) for separation.

4. Tank installation according to Claim 3,
c**haracterized in that** the reflector surface (8) blocks a flow path to the outlet for liquid passing through the opening (5) when the flap (6) is open, by virtue of the fact that the reflector surface (8) rests against the first partition wall (9) of the separation nipple (1).

5. Tank installation according to at least one of the preceding claims,
**characterized in that** the reflector surface (8) forms a further partition wall of the separation nipple (1) when the flap (6) is closed.

6. Tank installation according to at least one of the preceding claims,
**characterized in that** the flap (6) can be pivoted about a pivoting axis (10) to open and close, wherein the pivoting axis (10) is arranged at one end of the main surface (7).

7. Tank installation according to at least one of the preceding claims,
**characterized in that** the pivoting axis (10) of the flap (6) is arranged at an end of the main surface (7) of the flap (6) which is closer to a tank cap (11) of the filler pipe (3).

8. Tank installation according to at least one of the preceding claims,
**characterized in that** the flap (6) is arranged in the filler pipe (3) in such a way that it is pivoted to close the opening by a fuel nozzle inserted into the filler pipe (3).

## Revendications

1. Arrangement de réservoir pour un véhicule automobile, comprenant un réservoir, une conduite d'entrée de dégazage (2) reliée au réservoir, un tube de remplissage (3) destiné à l'avitaillement du réservoir, une conduite de sortie de dégazage (4) reliée à un filtre à vapeurs de carburant, et un raccord d'isolation (1) destiné à séparer le liquide hors de la conduite d'entrée de dégazage (2) dans le tube de remplissage (3), le raccord d'isolation (1) comprenant une entrée qui peut être reliée à la conduite d'entrée de dégazage (2), une sortie qui peut être reliée à la conduite de sortie de dégazage (4), une ouverture (5) qui peut être reliée à l'espace intérieur du tube de remplissage (3) et un clapet (6), l'ouverture (5) pouvant être fermée par le biais du clapet (6), l'entrée du raccord d'isolation (1) étant reliée à la conduite d'entrée de dégazage (2), la sortie du raccord d'isolation (1) étant reliée à la conduite de sortie de dégazage (4), l'ouverture (5) du raccord d'isolation (1) étant reliée à l'espace intérieur du tube de remplissage (3), le clapet (6) comportant une surface principale (7) et une surface de réflecteur (8) inclinée par rapport à la surface principale (7), l'ouverture (5) étant fermée par la surface principale (7) lorsque le clapet (6) est fermé et la surface de réflecteur (8), conjointement avec la surface principale (7), formant un réflecteur lorsque le clapet (6) est ouvert, lequel dévie le liquide qui passe à travers l'ouverture (5) en direction de l'extrémité côté réservoir du tube de remplissage (3), **caractérisé en ce que** la surface de réflecteur (8), lorsque le clapet (6) est ouvert, bloque un trajet d'écoulement vers la sortie pour le liquide qui passe à travers l'ouverture (5).

2. Arrangement de réservoir selon la revendication 1, **caractérisé en ce que** la surface de réflecteur (8) est inclinée par rapport à la surface principale (7) selon un angle compris entre 30 et 150 degrés, de préférence entre 60 et 120 degrés, notamment de préférence d'environ 90 degrés ou d'environ 100 degrés.

3. Arrangement de réservoir selon au moins l'une des revendications précédentes, **caractérisé en ce que** le raccord d'isolation (1) comporte au moins une première cloison étanche (9) destinée à la séparation.

4. Arrangement de réservoir selon la revendication 3, **caractérisé en ce que** la surface de réflecteur (8), lorsque le clapet (6) est ouvert, bloque un trajet d'écoulement vers la sortie pour le liquide qui passe à travers l'ouverture (5) par le fait que la surface de réflecteur (8) repose contre la première cloison étanche (9) du raccord d'isolation (1).

5. Arrangement de réservoir selon au moins l'une des revendications précédentes, **caractérisé en ce que** la surface de réflecteur (8), lorsque le clapet (6) est fermé, forme une cloison étanche supplémentaire du raccord d'isolation (1).

6. Arrangement de réservoir selon au moins l'une des revendications précédentes, **caractérisé en ce que** le clapet (6) peut pivoter autour d'un axe de pivotement (10) pour s'ouvrir et se fermer, l'axe de pivotement (10) étant disposé à une extrémité de la surface principale (7) .

7. Arrangement de réservoir selon au moins l'une des revendications précédentes, **caractérisé en ce que** l'axe de pivotement (10) du clapet (6) est disposé à une extrémité de la surface principale (7) du clapet (6) qui fait face à une fermeture de réservoir (11) du tube de remplissage (3).

8. Arrangement de réservoir selon au moins l'une des revendications précédentes, **caractérisé en ce que** le clapet (6) est disposé dans le tube de remplissage (3) de telle sorte qu'il est pivoté en vue de fermer l'ouverture par un robinet de distribution introduit dans le tube de remplissage (3).
